# EUROPEAN PATENT APPLICATION

(11) **EP 3 511 820 A1**
(43) Date of publication of application: **17.07.2019**
(21) Application number: 18151637.8
(22) Date of filing: 15.01.2018
(51) Int. Cl.: G06F 8/60, G06F 9/48, H04L 12/24

(54) **CLOUD BASED ARTIFACT LIFECYCLE MANAGEMENT SYSTEM AND METHOD THEREOF**

(71) Applicant: Siemens Aktiengesellschaft, 80333 München (DE)
(72) Inventor: Baierlein, Thomas, 90491 Nürnberg (DE); Boche, Maik, 90522 Oberasbach (DE); Burger, Stefan, 76764 Rheinzabern (DE); Ebert, Michael, 96450 Coburg (DE); Gallinat, Christina, 90403 Nürnberg (DE); Koka, Preeti, 81673 München (DE); Riedl, Riccardo, 91336 Heroldsbach (DE); Wahl, Alexander, 90530 Wendelstein (DE)
(74) Representative: Isarpatent

(57) **Abstract**

A present invention relates to a cloud based artifact lifecycle management system and method thereof. In one embodiment, a method executed by a cloud platform for artifact lifecycle management comprises developing artifacts to be deployed on the cloud platform; validating the artifacts to be deployed on the cloud platform; authenticating and deploying the validated artifacts in a product environment on the cloud platform; provisioning the artifacts deployed on the cloud platform to one or more tenants; monitoring the artifacts deployed on the cloud platform; and providing feedback to a developer, a deployer and/or tenant(s) in case of issues with the artifact.

## Description

The present invention generally relates to cloud computing, and more particularly relates to cloud based artifact lifecycle management system and method thereof.

With the advent of cloud computing, industrial assets (e.g., motors, robots, industrial equipments, automation devices, etc.) positioned in an industrial plant are connected to a cloud platform via agents (IoT gateway). The cloud platform enables commissioning, configuring, monitoring, controlling, maintenance of assets or industrial set up from remote location. To provide this, the cloud platform is configured for storing models of assets, real-time operational data, etc, analyze the data, issue control commands to control a condition or asset, provide assistance during maintenance, and provide insights to the tenant/user of cloud platform. This is achieved by deploying and provisioning cloud based apps, simulation models, digital twins, engineering configuration, code snippets, APIs and so on. In general, these are known as artifacts. Each of the artifacts may be developed and deployed to serve a purpose (e.g., condition monitoring, trend analysis, predictive maintenance and so on).

Currently, the artifacts are developed at a different location and upload in a repository. These artifacts are then provisioned to tenants for managing the industrial set-up. There is no a cloud platform which enables artifact lifecycle management including development and testing of artifact, validation of the artifact, deployment of artifact and provisioning of artifact to the tenants of the cloud platform.

In light of the above, there exists a need for a cloud platform which can manage artifact throughout its lifecycle.

Therefore, it is object of the present invention to provide a cloud system comprising a cloud platform which enables artifact lifecycle management of artifacts deployed on the cloud platform.

The object of the present invention is achieved by the cloud system comprising the cloud platform capable of developing artifacts to be deployed on the cloud platform.

The object of the present invention is achieved by the cloud system comprising the cloud platform capable of validating the artifacts to be deployed on the cloud platform.

The object of the present invention is achieved by the cloud system comprising the cloud platform capable of authenticating and deploying the validated artifacts in a product environment on the cloud platform.

The object of the present invention is achieved by the cloud system comprising the cloud platform capable of provisioning the artifacts deployed on the cloud platform to one or more tenants.

The object of the present invention is achieved by the cloud system comprising the cloud platform capable of monitoring the artifacts deployed on the cloud platform and providing feedback to a developer, a deployer and tenant(s).

The object of the present invention is achieved by a cloud based method enabling artifact lifecycle management of the artifacts to be deployed on the cloud platform.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud system capable of managing artifacts throughout the lifecycle, according to an embodiment of the present invention;
- FIG 2: is a diagrammatic representation illustrating interaction between different components of the artifact lifecycle management module, according to an embodiment of the present invention;
- FIG 3: is a process flowchart illustrating an exemplary method of artifact lifecycle management on a cloud platform, according to an embodiment of the present invention;
- FIG 4: is a block diagram of an artifact development module capable of developing an artifact to be deployed in a productive environment, according to an embodiment of the present invention;
- FIG 5: is a block diagram of an artifact validation module capable of validating the artifact to be deployed in the productive environment, according to an embodiment of the present invention;
- FIG 6: is a block diagram of the artifact validator capable of performing validation checks on the artifact to be deployed in the productive environment, according to an embodiment of the present invention;
- FIG 7: is a process flowchart illustrating an exemplary method of performing validation of artifacts to be deployed on the cloud platform, according to an embodiment of the present invention;
- FIG 8: is a block diagram of the artifact deployment module capable of authenticating and deploying the artifact in the productive environment, according to an embodiment of the present invention;
- FIG 9: is a process flowchart illustrating an exemplary method of authenticating and deploying artifacts in the productive environment on the cloud platform, according to the embodiment of the present invention;
- FIG 10: is a graphical user interface view of the artifact development module depicting different artifacts associated with a developer.
- FIG 11: is a graphical user interface view of the artifact deployment module depicting an application to be deployed in the productive environment;
- FIG 12: is a graphical user interface view of the artifact deployment module depicting a dashboard associated with a provider;
- FIG 13: is a graphical user interface view of the artifact deployment module depicting status of applications associated with the provider;
- FIG 14: is a graphical user interface view of the artifact deployment module depicting notifications associated with the provider;
- FIG 15: is a graphical user interface view of the artifact deployment module depicting details of the application to be published to external users;
- FIG 16: is a graphical user interface view of the artifact provisioning module depicting status of the application for each tenant; and
- FIG 17: is a graphical user interface view of the artifact monitoring module depicting runtime behavior of the application being monitored.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

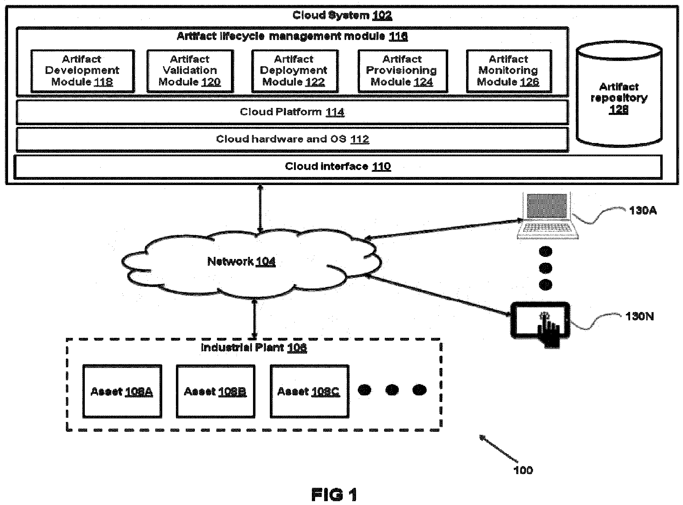

FIG 1 is a schematic representation of a cloud environment 100, according to an embodiment of the present invention. Particularly, FIG 1 depicts the cloud system 102 which is capable of providing cloud services for managing an industrial plant 106 comprising assets 108A-N. The cloud system 102 is connected to assets 108A-N in the industrial plant 106 via a network 104 (e.g., Internet). The assets 108A-N may include servers, robots, switches, automation devices, motors, valves, pumps, actuators, sensors and other industrial equipments. Although, FIG 1 illustrates the cloud system connected to one Industrial plant, one skilled in the art can envision that the cloud system 102 can be connected to several industrial plants located at different locations via the network 104. For example, the cloud services may include commissioning the industrial plant 106, monitoring and controlling the industrial plant 106, maintaining the industrial plant 106, upgrading the industrial plant 106 and so on. The cloud services may also includes managing assets in the Industrial plant, storing and analyzing plant data received from the assets 108A-N via IoT gateway (not shown), visualizing the analyzed data to personnel associated with the industrial plant 106, downloading software/firmware onto the assets, etc.

In order to access the cloud services, one or more artifacts are required to be deployed on a cloud platform, which are then accessed by personnel and assets in the industrial plant 106 to avail the cloud services. Therefore, the cloud system 102 is provided which is capable of managing artifacts throughout its lifecycle. Exemplary artifacts may include applications (application for monitoring plant), simulation models, engineering configuration, digital twin models, code snippets, APIs, security applications, firmware and so on.

The cloud system 102 is also connected to user devices 130A-N via the network 104. The user devices 130A-N can access the cloud system 102 managing and accessing artifacts, and accessing cloud services.

The cloud system 102 comprises a cloud interface 110, cloud hardware and OS 112, a cloud platform 114, and an artifact repository 128. The cloud interface 110 enables communication between the cloud platform 114 and the industrial plant 106. Also, the cloud interface 110 enables communication between the cloud platform 114 and the user devices 130A-N.

The cloud hardware and OS 112 may include one or more servers on which an operating system is installed and comprising one or more processing units, one or more storage devices for storing data, and other peripherals required for providing cloud computing functionality. The cloud platform 114 is a platform which implements functionalities such as data storage, data analysis, data visualization, data communication on the cloud hardware and OS 112 via APIs and algorithms; and delivers the aforementioned cloud services using artifacts. The cloud platform 114 employs an artifact lifecycle management module 116 for managing artifacts responsible for delivering cloud services throughout its lifecycle. The cloud platform may comprise a combination of dedicated hardware and software built on top of the cloud hardware and OS 112.

The artifact lifecycle management module 116 is stored in the form of machine-readable instructions and executable by the cloud platform 114. The artifact lifecycle management module 116 comprises an artifact development module 118, an artifact validation module 120, an artifact deployment module 122, an artifact provisioning module 124, and an artifact monitoring module 126. The artifact development module 118 is configured for generating a development environment for developing an artifact. The development environment is made accessible via a graphical user interface of the user device 130A-N using valid credentials. The artifact development module 118 is configured for generating an artifact package of the artifact using the development environment. If the artifact is an application, the artifact package may include binary code and a manifest file. Additionally, the artifact development module 118 is configured to testing the artifact package using one or more test scenarios via the development environment. The artifact development module 118 is configured to store the artifact in the artifact repository 128 for validation and deployment purposes. The artifact development module 118 is configured to receive feedback on the artifact from the artifact validation module 120, the artifact deployment module 122 and the user devices 130A-N. the artifact development module 118 is configured to process the feedback and make necessary changes to the artifact so that the artifact can be deployed and used without any issues.

The artifact validation module 120 is configured to automatically validate an artifact to be deployed on the cloud platform 114. The artifact deployment module 122 is configured to deploy the validated artifact in a product environment of the cloud platform 114. The productive environment is a live system which makes the artifact usable by tenants. In other words, the deployed artifact is executed in the productive environment when the tenant accesses the artifact. The artifact provisioning module 124 is configured to provision the deployed artifact to one or more tenants of the cloud platform 114. In other words, artifact provisioning module 124 is configured to assign the artifact to requesting tenants. The artifact monitoring module 126 is configured to monitor behavior of the artifact deployed in the productive environment during runtime (execution time), and provide feedback to the artifact development module 118, the artifact deployment module 122, and the tenants via the user devices 130A-N. The interaction between different modules of the artifact lifecycle management module 116 is described in greater detail below.

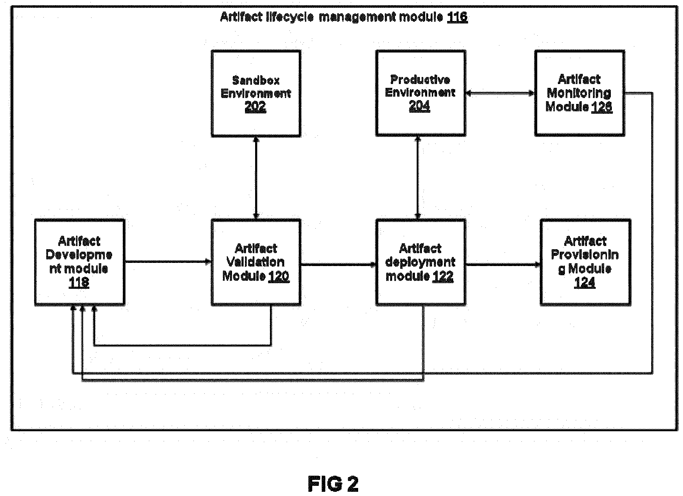

FIG 2 is a diagrammatic representation illustrating interaction between different components of the artifact lifecycle management module 116, according to an embodiment of the present invention. In an exemplary operation, the artifact development module 118 generates an artifact package (binary code with APIs and database files) of an artifact (e.g., software application) based on user inputs provided via an integrated development environment. The artifact development module 118 assigns a unique identifier to the artifact. Also, the artifact development module 118 performs testing of the artifact using different test scenarios and stores the artifact package in the artifact repository 128.

The artifact validation module 120 monitors new artifacts being stored in the artifact repository 128. Accordingly, when a new artifact is stored, the artifact validation module 120 automatically determines that there is a new artifact stored in the artifact repository 128. The artifact validation module 120 determines type of the artifact stored in the artifact repository 128 and determines one or more validation tests to be performed on the artifact based on the type of artifact. If the artifact is a software application, then the artifact validation module performs virus scan of the binary code or artifact package during pre-check, dependency check during static screening, and check behavior of the artifact by executing the artifact in a sandbox environment 202 during dynamic screening.

The artifact validation module 120 performs validation of the artifact using the determined validation checks. The artifact validation module 120 signs the artifact using a artifact signature (hash key) and stores the artifact signature associated with the artifact in the artifact repository 128. In some embodiments, the artifact validation module signs the artifact using checksum or certificate. Also, the artifact validation module 120 sends a first notification to the artifact development module 118 indicating the artifact validation is successfully performed.

If the artifact validation is not successful, the artifact validation module 120 determines reasons for unsuccessful validation of the artifact. The artifact validation module 120 determines whether the issues in the artifact can be resolved automatically. In such case, the artifact validation module 120 performs corrective actions on the artifact using machine learning model. The machine learning model is pretrained to resolve issues in the artifact if the validation of the artifact is unsuccessful. The artifact validation module 120 performs a validation check(s) which was unsuccessful on the modified artifact.

If the issues cannot be resolved, then the artifact validation module 120 sends a second notification to the artifact development module 118 indicating the reasons for unsuccessful validation of the artifact. The developer may fix the issues in the artifact based on the second notification using the development environment and store updated version of the artifact in the artifact repository 128. Accordingly, the artifact validation module 120 performs validation of new version of the artifact.

Based on the first notification, the artifact development module 118 sends a request to deploy the artifact in a productive environment 204 to a provider/deployer of the artifact. The artifact deployment module 122 downloads the artifact package associated with the artifact from the artifact repository 128. Also, the artifact deployment module 122 may provide APIs and other services such as database services required for deployment of the artifact on the cloud platform 114. The artifact deployment module 122 authenticates the artifact based on the artifact signature. In some embodiment, the artifact deployment module 122 verifies the artifact signature associated with the artifact. If the artifact is authenticated successfully, then the artifact deployment module 122 deploys the artifact in the productive environment 204 of the cloud platform 114 using the artifact package, APIs, and database services. Since the artifact is deployed in the productive environment 204, the artifact can be accessed and used to perform associated functions such as commissioning, configuring, monitoring, controlling, and/or maintaining assets 108A-N in the industrial plant 106 via the cloud platform 114.

Accordingly, the artifact deployment module 122 may test the behavior of the artifact in the productive environment 204. If the performance of the artifact is satisfactory, the artifact deployment module 122 assigns the artifact to one or more tenants who have requested the access to the artifact. Accordingly, the artifact provisioning module 124 provisions the artifact to the requested tenants. In some embodiments, the artifact provisioning module 124 establishes a set-up route between the artifact in the productive environment 204 and profile of the tenants. This enables the authorized tenants to view, access and use the artifact and its functionality via the cloud platform 114. The use of artifact may also mean using one or more services hosted on the cloud platform 114 by accessing the artifact deployed in the productive environment 204. The artifact monitoring module 126 monitors behavior of the artifact during runtime, and reports the abnormal behavior of the artifact to the owner of the artifact, the provider of the artifact and the tenant of the artifact. In one embodiment, the artifact deployment module 122 may temporarily suspends the execution of the artifact in case abnormal behavior is reported. In another embodiment, the artifact deployment module 122 may uninstall the artifact from the productive environment 204 in case abnormal behavior is reported. In this manner, the artifact is developed, validated, deployed and provisioned using the cloud platform 114.

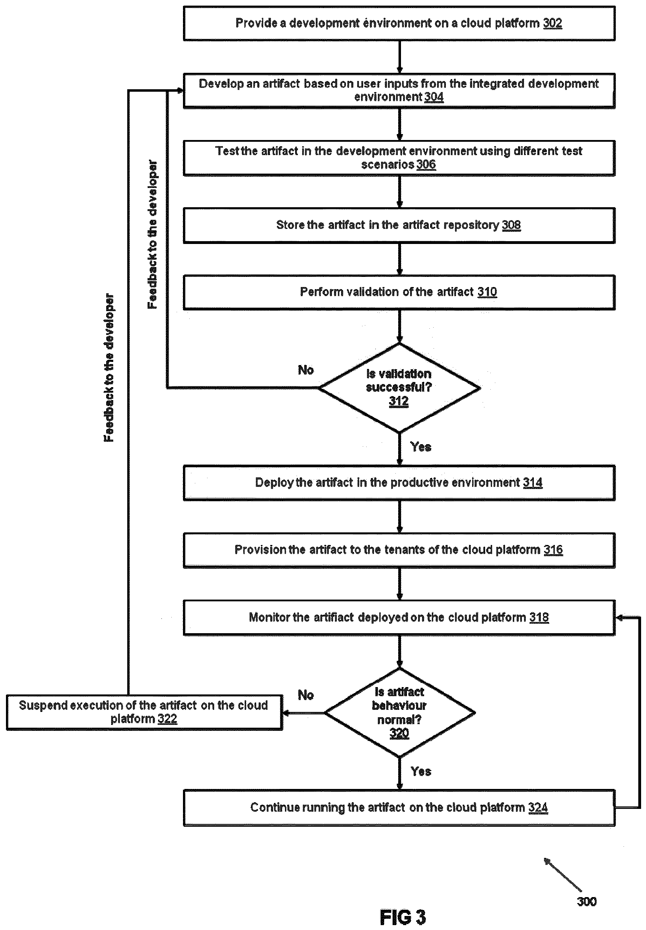

FIG 3 is a process flowchart 300 illustrating an exemplary method of artifact lifecycle management on a cloud platform, according to an embodiment of the present invention. At step 302, a development environment is provided on the cloud platform 114. The development environment may comprise providing a user interface with necessary tools and software, hosted on the cloud platform 114, such that the development environment enables the developer to develop and test artifacts to be deployed on the cloud platform 114. In some embodiments, the development environment can be collaborative development environment which enables multiple developers can develop an artifact from remote locations in a collaborative manner.

For example, if the artifact is a software application, then the development environment provides a user interface to generate application package (e.g., set of files related to the software application). The development environment may be set up based on profile information of the developer. Different development environments are set up for different developers based on their profile information. Also, the development environment may be provided based on type of artifact to be developed. If the artifact to be developed is an application, then development environment suitable for generating the application may be provided. However, if the artifact to be developed is an engineering configuration, then the development environment for generating engineering configuration for automation system is generated. The development environment is hosted on cloud system 102 and hence can be also termed as 'integrated development environment'.

At step 304, an artifact is developed using the integrated development environment based on user inputs from the developer. At step 306, the artifact is tested in the integrated development environment using different test scenarios. At step 308, the artifact is stored in the artifact repository. For example, the artifact package including supporting files and APIs are stored in the artifact repository. The artifact is also assigned a unique identifier so that the artifact can be searched and retrieved from the artifact repository from time to time. The artifact also be assigned a version number which would help in managing artifact based on versions.

At step 310, validation is performed on the artifact. For example, one or more validation checks are performed on the artifacts. If the validation checks are successful, the artifact is signed using a artifact signature (e.g., hash key). The artifact signature associated with the artifact is stored in the artifact repository. At step 312, it is determined whether the validation performed on the artifact is successful. If the validation is not successful, feedback is provided to the developer indicating validation checks which have failed and reasons for failure. The developer may fix the issues in the artifact and store modified artifact in the artifact repository. The validation checks are performed again, when the modified artifact is automatically determined in the artifact repository. If the validation is not successful, then the artifact may be automatically modified based on corrective actions. The corrective actions are automatically computed based on machine learning techniques and so on. The validation checks are performed on the modified artifact. In some embodiments, the cloud platform 114 performs only the validation checks which the artifact failed. This would save time and resources in validating the artifact.

If the validation of the artifact is successful, then at step 314, the artifact is authenticated and deployed in a productive environment. In some embodiments, if the validation of the artifact is successful, then the artifact is assigned to an appropriate provider/deployer by the developer. Accordingly, the artifact is displayed in a user interface of the concerned provider/deployer. The provider initiates deployment process. Alternatively, the artifact may be automatically deployed in the productive environment of the cloud platform 114 once the validation of the artifact is successful.

At step 316, the artifact is provisioned to one or more tenants of the cloud platform 114. The tenant of the cloud platform 114 can be a tenant administrator of an Industrial plant 106 who can assign rights to access the artifact deployed on the cloud platform 114 to sub-tenants. In Industrial plant, the sub-tenants may include but not limited to plant operators, field engineers, commissioning agents, IoT agents, IoT gateways, Industrial assets, remote devices such as mobile, tablet, laptops and so on. For example, the artifacts deployed on the cloud platform 114 may enable the tenants to commission the industrial plant, monitor and control the assets in the industrial plant and its operation, conduct maintenance of the industrial plants and its assets, configure automation system in the industrial plant, monitor and control the automation system in the industrial plant using various services provided by the cloud platform 114. Additionally, the artifact may enable the tenant to configure assets using the cloud services, onboard assets on to the cloud platform, send real-time plant data to the cloud platform, retrieve aggregated data from the cloud system 102, analyze the plant data or condition, visualize analyzed plant data, access digital twin of assets, perform simulation of plant environment, manage IoT devices, download different versions of firmware, etc using the services provided by the cloud platform 114. During execution, the artifact may also be responsible for processing requests from the sub-tenants by invoking appropriate APIs and providing output to the tenants based on the execution of the APIs and its functions.

At step 318, the artifact deployed on the cloud platform 114 is monitored in real-time. For example, the artifact is monitored for malicious behavior, performance, suspicious activity, high resource consumption, and so on. At step 320, it is determined whether the operation of the artifact is normal. If it is determined that the operation of the artifact is not normal, then at step 322, the execution of the artifact on the cloud platform 114 is suspended temporarily or undeployed from the productive environment based on the nature of the issue. Accordingly, a feedback notification indicating abnormal behavior of the artifact is provided to the developer of the artifact, the tenant of the cloud platform 114, and the provider of the artifact. The developer may modify the artifact based on the feedback notification. The artifact may be revalidated and/or re-deployed on the productive environment. Also, the modified artifact is provisioned to the tenants. If no abnormal behavior is found during monitoring activity, then execution of the artifact is continued uninterruptedly.

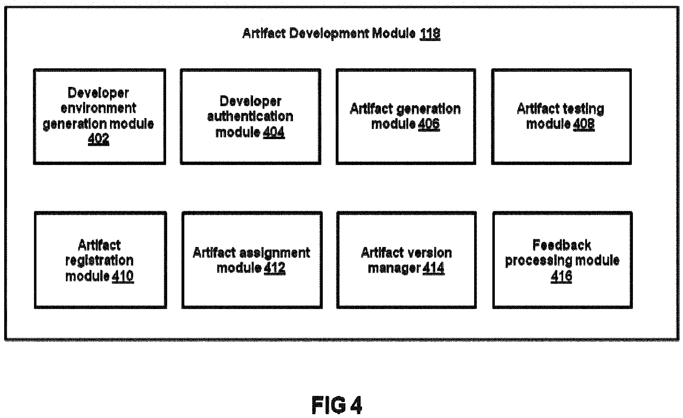

FIG 4 is a block diagram of the artifact development module 118 capable of developing an artifact to be deployed in the productive environment 204, according to an embodiment of the present invention. The artifact development module 118 comprises a developer environment generation module 402, a developer authentication module 404, an artifact generation module 406, an artifact testing module 408, an artifact registration module 410, an artifact assignment module 412, an artifact version manager 414, and a feedback processing module 416.

The development environment generation module 402 is configured to generate a development environment for developing an artifact. In one embodiment, the development environment generation module 402 generates the development environment based on profile information of a requesting developer. In another embodiment, the development environment generation module 402 generates the development environment based on type of artifact to be developed. The artifact can be an application, a code snippet, an automation project, a digital twin models, APIs, connectivity configurations, event-based functionality, security applications, a simulation model and the like. The development environment may be provided based on the type of artifact that is to b developed. The development environment provides a graphical and/or console based user interface on any of the user devices 130A-N belonging to one or more developers. The graphical user interface also displays needed tools and widgets to develop the artifact.

The developer authentication module 404 authenticates the developer to access the development environment based on login credentials inputted by the developer. The artifact generation module 406 is configured to generate artifact package for deployment on the cloud platform 114 based on user inputs (drag and drop feature) received from the developer. The artifact generation module 406 is configured to generate unique identifier for the artifact. The artifact testing module 408 is configured to generate test cases for testing the generated artifact in a test environment. For example, test cases are based on type of artifacts including test data from assets, time series data, etc.). The artifact testing module 408 is configured to test the artifact in the test environment using the generated test cases.

The artifact registration module 410 is configured to store the artifact in the artifact repository 128. The artifact registration module 410 is configured to enable or disable specific artifact versions for validation and deployment. The artifact assignment module 412 is configured for assigning the artifact to a provider/deployer for deployment in a productive environment 204 upon successful validation of the artifact. The artifact version manager 414 is configured to manage different versions of the artifact during the entire lifecycle of the artifact using unique artifact ID. The feedback processing module 416 is configured to process feedback from the artifact validation module 120, the artifact deployment module 122, and the artifact monitoring module 126. The feedback processing module 416 may provide recommendations to the artifact generation module 406 so that the artifact generation module 406 can make necessary medications to the artifact in next version.

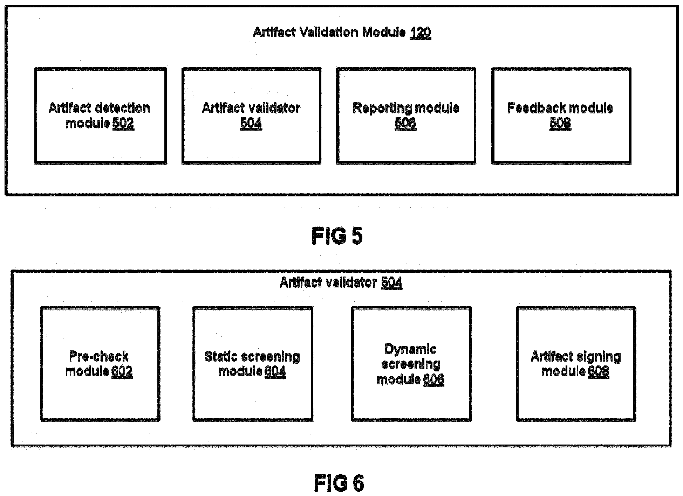

FIG 5 is a block diagram of the artifact validation module 120 capable of validating the artifact to be deployed in the productive environment 204, according to an embodiment of the present invention. The artifact validation module 120 comprises an artifact detection module 502, an artifact validator 504, a reporting module 506, and a feedback module 508.

The artifact detection module 502 is configured for automatically detecting storing of a new artifact by the artifact development module 118 in the artifact repository 118. The artifact validator 504 is configured for performing a plurality of validation checks on the artifact to identify issues in the artifact prior to deployment. In one embodiment, a pre-check (first valiation check), static screening (a second validation check), and dynamic screening (third validation check) may be performed on the artifact. The artifact validator 504 is also configured to sign the artifact using a artifact signature if the artifact passes all the validation checks. The reporting module 506 is configured for generating a first notification indicating that the artifact has passed the validation process.

The feedback module 508 is configured for determining which of the validation checks were unsuccessful. The feedback module 508 is configured determining reason responsible for unsuccessful validation checks. The feedback module 508 also configured for automatically resolving issues by performing corrective actions computed using machine learning techniques. The feedback module 508 is configured for generating a second notification indicating that the artifact failed validation check(s) and reasons for such failure. The feedback module 508 is configured for sending the second notification to the artifact development module 118.

FIG 6 is a block diagram of the artifact validator 504 capable of performing validation checks on the artifact to be deployed in the productive environment 204, according to an embodiment of the present invention. The artifact validator 504 comprises a pre-check module 602, a static screening module 604, a dynamic screening module 606, and an artifact signing module 608.

The pre-check module 602 is configured to perform pre-check on an artifact package of the artifact. The pre-check is performed on the artifact in order to identify obvious defects in artifacts. For example, the pre-check module 602 may perform virus and malicious code scan on the artifact package, check icon of artifact for compliance, determine adherence of artifact to standards, perform syntax and semantics checks, etc.

The static screening module 604 is configured to perform static screening of the artifact. For example, the static screening module 604 performs dependency checks, insecure credential analysis, indicator carving analysis, application asset carving and clearing, etc. The static screening module 604 may crawl for dependencies and identify vulnerabilities in the dependencies. The static screening module 604 may crawl for hardcoded certificates, private keys, usernames, password etc. and identify insecure credentials associated with the artifact. The static screening module 604 may crawl for hardcoded URLs, IP addresses, domains/checks against threat intelligence database. The static screening module 604 may crawl for embedded files (e.g., images, stylesheets, scripts, documents) and check against anti-virus engines and threat intelligence database.

The dynamic screening module 606 is configured to perform dynamic screening on the artifact. In one embodiment, the dynamic screening module 606 is configured to test the behavior of the artifact in runtime environment by executing the artifact in the sandbox environment 202. In this embodiment, the dynamic screening module 606 is configured to determine whether the artifact behavior is acceptable when deployed on the cloud platform. For example, the dynamic screening module 606 may check for OWASP web-application vulnerabilities, data exfiltration, insecure data storage, API conformance, robustness, performance, user interface/experience, deployment issues, etc.

The artifact signing module 608 is configured to sign the artifact with an artifact signature. The artifact may be signed using a checksum or certificate. In one embodiment, the artifact signing module 608 applies SHA-256 to the artifact files and generates a hash key for the artifact. Exemplary hash key for an artifact is given below:
0xe3b0c44298fc1c149afbf4c8996fb92427ae41e4649b934ca495991b785 2b855. The artifact signing module 608 stores the artifact signature of the signed artifact in the artifact repository 128.

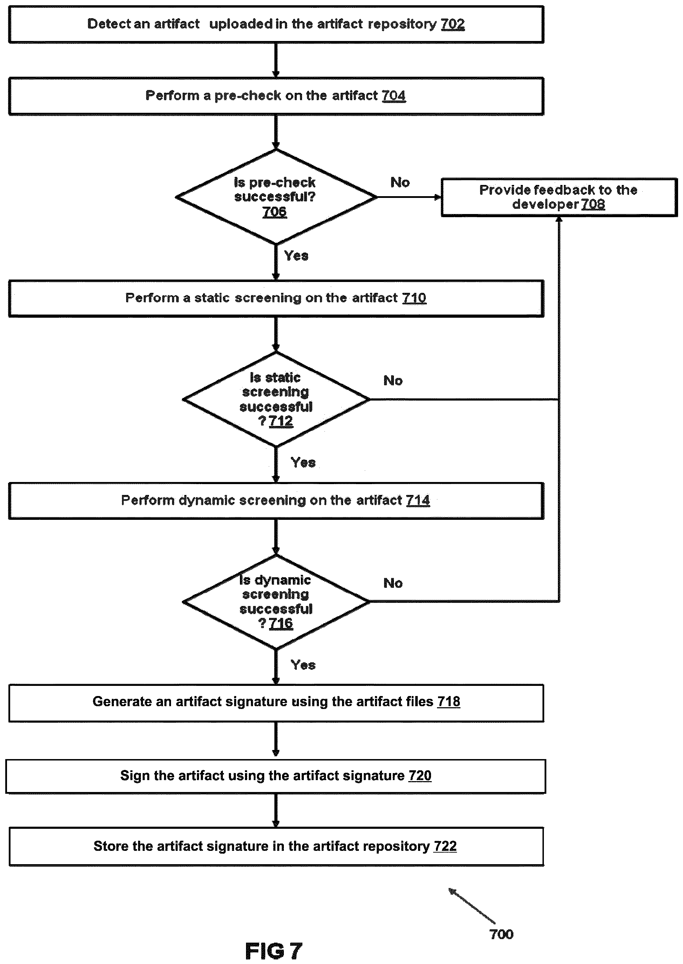

FIG 7 is a process flowchart 700 illustrating an exemplary method of performing validation of artifacts to be deployed on the cloud platform 114, according to an embodiment of the present invention. At step 702, an event associated with an artifact in the artifact repository 128 is automatically determined. For example, the event can be act of storing the artifact package in the artifact repository by the artifact development module 118. Alternatively, the event can be act of updating the artifact package stored in the artifact repository. If there are several artifacts waiting for validation, the newly determined artifact is added to the queue. If the multiple artifacts are uploaded simultaneously, the artifacts are added to the respective queue based on type of artifact. For example, several queues of artifacts are maintained; each queue contains artifacts of a specific type.

At step 704, a pre-check of the artifact files is performed to determine obvious defects in the artifact. At step 706, it is determined whether pre-check performed on the artifact is successful. If the artifact fails the pre-check, then at step 708, a feedback indicating that the artifact failed one of the validation checks is sent to owner of the artifact (e.g., the developer). Alternatively, the artifact is modified according to pre-defined corrective actions and the pre-check of the modified artifact is performed. In some embodiments, the pre-defined corrective actions are determined using machine learning techniques. If the artifact passes the pre-check, then at step 710, a static screening of the artifact files is performed. The static screening of the artifact includes dependency checks, insecure credential analysis, indicator carving analysis, application asset carving and clearing, etc.

At step 712, it is determined whether the static screening performed on the artifact is successful. If the artifact fails static screening, then at step 708, a feedback indicating that the artifact failed one of the validation checks is sent to owner of the artifact (e.g., the developer). Alternatively, the artifact is modified according to pre-defined corrective actions and the static screening of the modified artifact is performed. In some embodiments, the pre-defined corrective actions are determined using machine learning techniques. If the artifact passes the static screening, then at step 714, a dynamic screening of the artifact files is performed. In one embodiment, dynamic screening of the artifact involves executing the artifact in a sandbox environment to test behavior of the artifact during runtime. In this embodiment, it is determined whether behavior of the artifact is within the acceptable standard when deployed on the cloud platform.

At step 716, it is determined whether the dynamic screening performed on the artifact is successful. If the artifact fails dynamic screening, then at step 708, a feedback indicating that the artifact failed one of the validation checks is sent to owner of the artifact (e.g., the developer). Alternatively, the artifact is modified according to pre-defined corrective actions and the static screening of the modified artifact is performed. In some embodiments, the pre-defined corrective actions are determined using machine learning techniques.

If the dynamic screening of the artifact is successful, then at step 718, a artifact signature for the artifact is generated using the artifact files. For example, a hash key is generated by applying SHA-256 algorithm on the artifact files. At step 720, the artifact is signed using the artifact signature. That is, the artifact signature is linked to identifier associated with the artifact. At step 722, the artifact signature assigned to the artifact is stored in the artifact repository 128. Also, a notification indicating that the artifact is successfully validated is sent to the artifact developer module 118. It can be noted that the pre-check, static screening and dynamic screening of the artifact may be performed in parallel. This would save time required for validating the artifact.

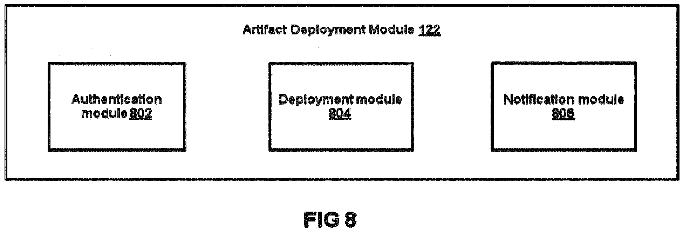

FIG 8 is a block diagram of the artifact deployment module 122 capable of authenticating and deploying the artifact in the productive environment 204, according to an embodiment of the present invention. The artifact deployment module 122 comprises an authentication module 802, a deployment module 804, and a notification module 806.

The authentication module 802 is configured to authenticate the artifact request to be deployed in the productive environment 204. In one embodiment, the authentication module 802 re-generates hash key by applying SHA-256 on the artifact files. The authentication module 802 compares the re-generated hash key with the hash key associated with the artifact stored in the artifact repository 128. The authentication module 802 determines whether the hash keys match. The authentication module 802 triggers an event to deploy the artifact if the both hash keys match.

The deployment module 804 is configured to deploy the artifact in the productive environment 204 based on the event triggered by the authentication module 802. The deployment module 804 is configured to provide necessary APIs and database services for deploying the artifact in the productive environment 204.

The notification module 806 is configured to notify the owner/deployer of the artifact in case the authentication fails. The notification module 806 is also configured to notify the provider/deployer in case the artifact is successfully deployed in the productive environment 204.

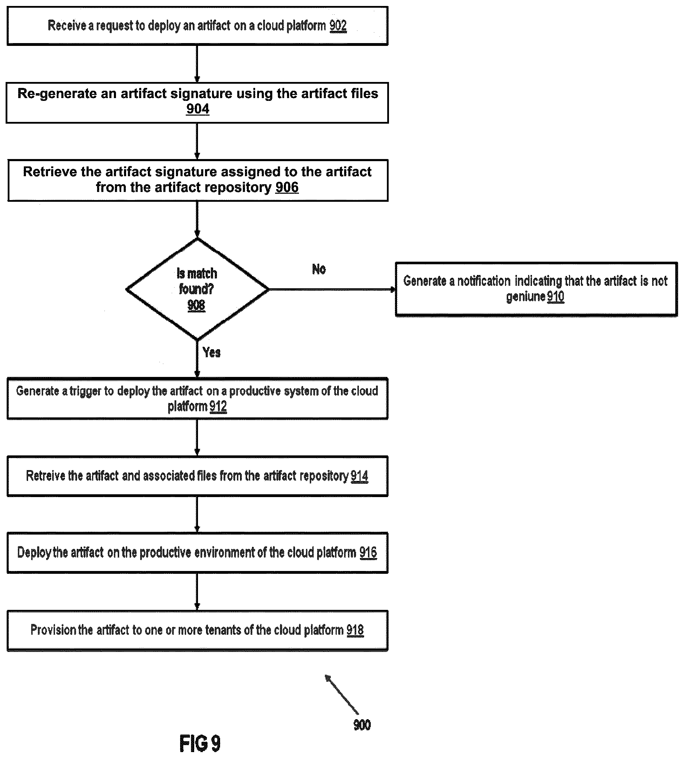

FIG 9 is a process flowchart 900 illustrating an exemplary method of authenticating and deploying artifacts in the productive environment on the cloud platform 114, according to the embodiment of the present invention. At step 902, a request to deploy the artifact on the cloud platform 114 is received. In one embodiment, the artifact may assigned to a specific provider/deployer for deployment in the productive environment either automatically or by the owner of the artifact upon successful validation of the artifact. The assignment of the artifact is sent as a request to deploy the artifact on the cloud platform 114. Alternatively, the provider/deployer may search for a desired artifact in the artifact repository 128 using an artifact identifier. The provider/deployer may send a request to the artifact deployment module 124 to deploy the artifact.

At step 904, signature is re-generated using artifact files associated with the artifact to be deployed on the cloud platform 114. For example, a hash key is re-generated by applying SHA-256 algorithm on the artifact files. At step 906, the artifact signature associated with the artifact is retrieved from the artifact repository 128. At step 908, it is determined whether the artifact signature matches with the re-generated signature. If no match is found, then at step 910, a notification is generated indicating that the artifact is not genuine. Accordingly, the request to deploy the artifact on the cloud platform 114 is rejected.

If match is found, at step 912, the artifact package associated with the artifact and associated files (e.g., APIs, database files, etc.) are retrieved from the artifact repository 128. At step 916, the artifact is deployed in the productive environment 204 of the cloud platform 114. At step 918, the artifact is provisioned to one or more tenants of the cloud platform 114. For example, the artifact is assigned to the tenants so that the tenants can use the artifact deployed in the productive environment. The artifact is assigned to tenants who have subscribed to the artifact. In addition, the tenants can assign the artifact to sub-tenants so that sub-tenants can access the artifact.

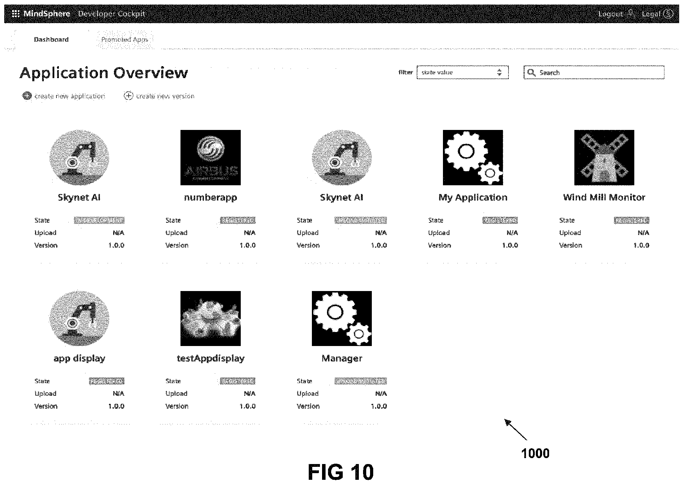

FIG 10 is a graphical user interface view 1000 of the artifact development module 118 depicting different artifacts associated with a developer. In FIG 10, the graphical user interface view 1000 displays a dashboard associated with the developer. The dashboard displays a grid layout of different applications associated with a developer (e.g., Jonathan Doe). The dashboard displays icon associated with the artifact, state of the artifact (Registered, upload in progress, development in progress), and version number. The dashboard also enables the developer to create a new artifact or a new version of the artifact.

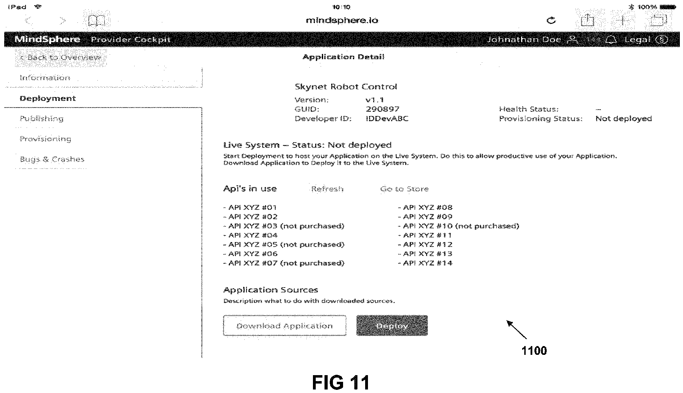

FIG 11 is a graphical user interface view 1100 of the artifact deployment module 122 depicting an application to be deployed in the productive environment 204. In FIG 11, the graphical user interface view 1100 depicts details of an application (skynet robot control) ready for deployment in the productive environment 204. The graphical user interface 1100 also displays APIs required for deployment of the application on a live system (i.e., the productive environment). The graphical user interface 1100 also provides a deploy button which enables the provider to trigger deployment of the application in the productive environment 204.

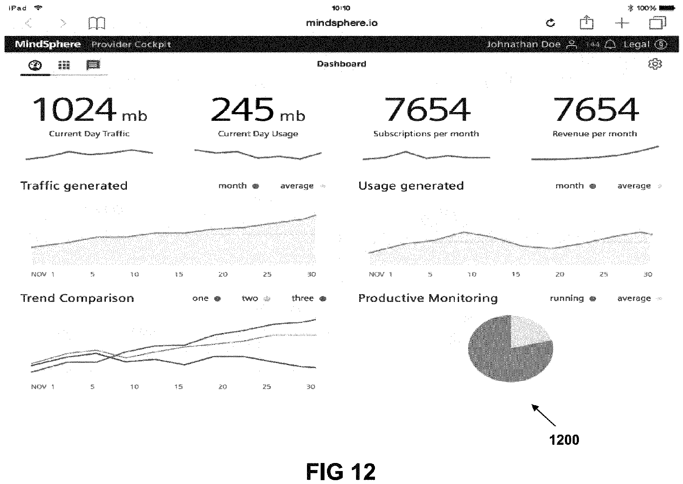

FIG 12 is a graphical user interface view 1200 of the artifact deployment module 122 depicting a dashboard associated with a provider. In FIG 12, the graphical user interface view 1200 displays a dashboard of a provider which displays indicators like current traffic, current day usage, subscriptions per month, revenue per month, trend comparison, productive monitoring, etc.

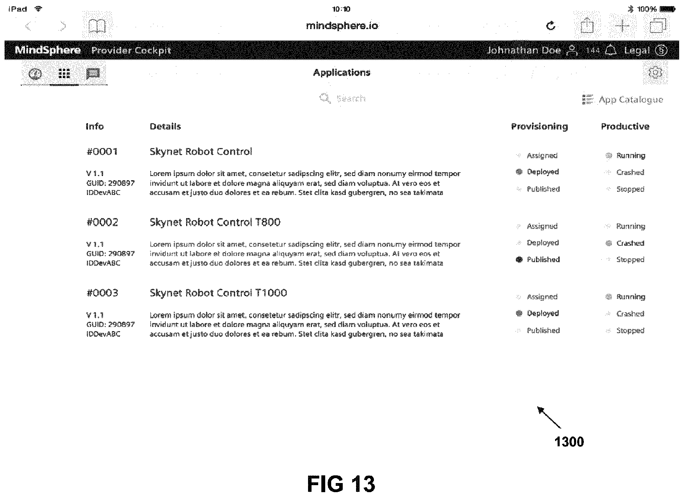

FIG 13 is a graphical user interface view 1300 of the artifact deployment module 122 depicting status of applications associated with the provider. In FIG 13, the graphical user interface view 1300 displays live status of the applications deployed by the provider in the productive environment. The status may indicate whether the application is running, deployed, published, crashed, stopped, assigned and so on.

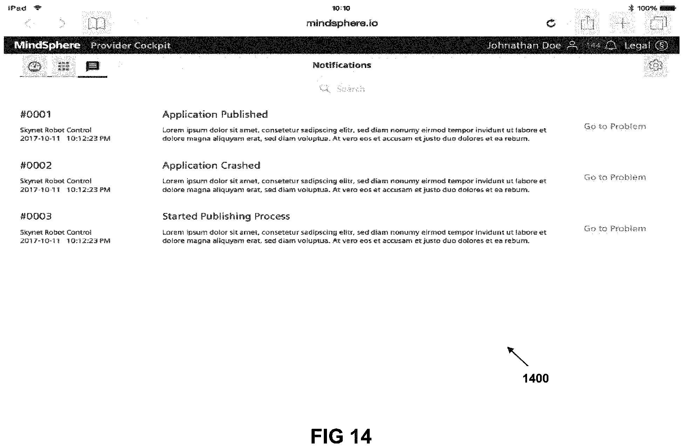

FIG 14 is a graphical user interface view 1400 of the artifact deployment module 122 depicting notifications associated with the provider. In FIG 14, the graphical user interface view 1400 displays notifications received by the provider from the cloud platform 114. The notifications are displayed in a list view. For example, the notification may display issues associated with the applications.

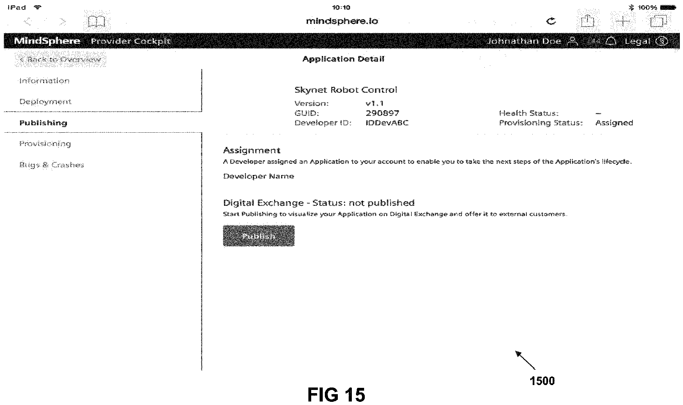

FIG 15 is a graphical user interface view 1500 of the artifact deployment module 122 depicting details of the application to be published to external users. In FIG 15, the graphical user interface view 1500 displays details of application assigned by the developer. The graphical user interface view 1500 enables to publish the application so that external customers can view the application as ready for deployment/provisioning on a digital exchange interface.

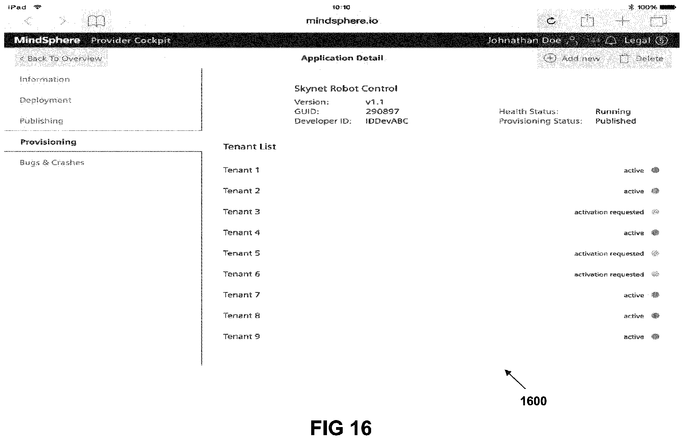

FIG 16 is a graphical user interface view 1600 of the artifact provisioning module 124 depicting status of the application for each tenant. In FIG 16, the graphical user interface view 1600 displays tenants who have subscribed the published application (skynet robot control) along with status (active, activation requested) for respective tenants.

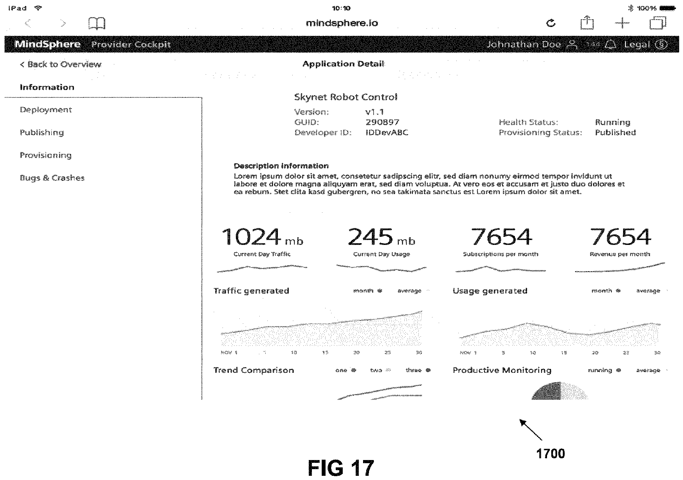

FIG 17 is a graphical user interface view 1700 of the artifact monitoring module 126 depicting runtime behavior of the application being monitored. In FIG 17, the graphical user interface view 1700 displays live status of the deployed application which is monitored by the artifact monitoring module 126. The live status indicates health status of the application, traffic data, usage data, trend comparison, etc.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

## Claims

1. A method of artifact lifecycle management comprising:
validating, by the cloud platform, at least one artifact to be deployed on a cloud platform;
deploying, by the cloud platform, the validated artifact in a product environment of the cloud platform; and
provisioning, by the cloud platform, the deployed artifact to one or more tenants of the cloud platform.

2. The method of claim 1, further comprising:
providing, by the cloud platform, a development environment for developing an artifact;
generating, by the cloud platform, an artifact package of the artifact using the development environment;
testing, by the cloud platform, the artifact package using one or more test scenarios using the development environment.

3. The method of claim 1, further comprising:
monitoring, by the cloud platform, behavior of the artifact deployed in the productive environment during runtime; and
reporting abnormal behavior of the artifact.

4. A cloud system for artifact lifecycle management comprising:
a cloud platform comprising an artifact lifecycle management module, wherein the artifact lifecycle management module comprises:
an artifact validation module configured to validate at least one artifact;
an artifact deployment module configured to deploy the validated artifact in a product environment of the cloud platform; and
an artifact provisioning module configured to provision the deployed artifact to one or more tenants of the cloud platform.

5. The cloud system of claim 1, wherein the artifact lifecycle management module comprises an artifact development module configured to:
provide a development environment for developing an artifact;
generate an artifact package of the artifact using the development environment;
test the artifact package using one or more test scenarios using the development environment.

6. The cloud system of claim 4, wherein the artifact lifecycle management module further comprises a monitoring module configured to:
monitor behavior of the artifact deployed in the productive environment during runtime; and
report abnormal behavior of the artifact.

7. A computer-program product, comprising machine-readable instructions, which when executed by a cloud system, cause the cloud system to perform method according to claims 1-3.
